# EUROPÄISCHE PATENTSCHRIFT

(11) **EP 1 725 972 B1**
(45) Veröffentlichungstag und Bekanntmachung des Hinweises auf die Patenterteilung: **01.09.2010**
(21) Anmeldenummer: 05701172.8
(22) Anmeldetag: 25.01.2005
(51) Int. Cl.: G06K 7/00, G06K 19/07

(54) **SYSTEM MIT EINEM MOBILEN DATENTR GER UND EINEM ENDGER T**
SYSTEM COMPRISING A MOBILE DATA SUPPORT AND A TERMINAL
SYSTEME COMPOSE D'UN SUPPORT DE DONNEES MOBILE ET D'UN TERMINAL

(30) Priorität: 26.02.2004 DE 102004009349
(43) Veröffentlichungstag der Anmeldung: 29.11.2006
(73) Patentinhaber: Giesecke & Devrient GmbH, 81677 München (DE)
(72) Erfinder: KÖGLMEIER, Helmut, 81545 München (DE)
(74) Vertreter: Höhfeld, Jochen
(86) Internationale Anmeldenummer: PCT/EP2005/000711
(87) Internationale Veröffentlichungsnummer: WO 2005/086070

(56) Entgegenhaltungen:
- EP-A- 0 347 894
- US-A- 4 803 351
- US-B1- 6 223 298

## Beschreibung

Die Erfindung betrifft ein System mit einem mobilen Datenträger und einem Endgerät. Weiterhin betrifft die Erfindung einen mobilen Datenträger und ein Verfahren zum Betreiben eines mobilen Datenträgers.

Mobile Datenträger können vielfältig eingesetzt werden und sind insbesondere in Form von Chipkarten weit verbreitet. Für den Betrieb einer Chipkarte ist in der Regel ein Endgerät erforderlich, das die Chipkarte mit einer Betriebsspannung und mit einem Taktsignal versorgt und zur Durchführung einer Anwendung mit der Chipkarte kommuniziert. Beispielsweise aus US 4,803,351 ist es bekannt, dass die bereitgestellte Betriebsspannung unterschiedliche Werte haben kann.

Es besteht mitunter die Anforderung, dass gewisse Aktionen der Chipkarte in regelmäßigen Zeitabständen durchgeführt werden müssen. Zum Beispiel kann bei Mobilfunkanwendungen vorgesehen sein, die von der Chipkarte durchgeführte Kommandoabarbeitung bei länger dauernden Kommandos in regelmäßigen Echtzeitabständen zu unterbrechen und ein Signal an das Kommunikationsendgerät zu senden. Dieses Feature wird üblicherweise als MORE TIME bezeichnet und dient dazu, dem Mobilfunk-Netzwerkbetreiber die Möglichkeit zu geben, zwischenzeitlich eine Authentisierung von der Chipkarte zu verlangen.

Die Kommandolaufzeit in der Chipkarte kann von der Frequenz des angelegten Taktsignals abhängen. Da für die Frequenz des Taktsignals unterschiedliche Werte zugelassen sind und die meisten Chipkarten keine Möglichkeit haben, die angelegte Frequenz zu erkennen, wird die Unterbrechung so durchgeführt, dass der vorgegebene Echtzeitabstand bei allen zulässigen Frequenzen für das Taktsignal eingehalten wird. Diese Vorgehensweise hat allerdings den Nachteil, dass in vielen Fällen die Unterbrechung unnötig häufig durchgeführt wird und dabei jedes Mal Rechen- und Kommunikationszeit aufgewendet wird, ohne dass damit ein Nutzen verbunden ist.

Der Erfindung liegt die Aufgabe zugrunde, eine möglichst optimale Nutzung eines mobilen Datenträgers auch dann zu gewährleisten, wenn für wenigstens ein von einem Endgerät an den mobilen Datenträger angelegtes Versorgungssignal unterschiedliche Werte zugelassen sind.

Diese Aufgabe wird durch ein System und ein Verfahren mit der Merkmalskömbination der Ansprüche 1 und 16 gelöst. Die abhängigen Ansprüche beschreiben bevorzugte Ausführungsformen der Erfindung.

Das erfindungsgemäße System weist einen mobilen Datenträger und ein Endgerät auf. Das Endgerät stellt wenigstens ein Versorgungssignal für den Betrieb des mobilen Datenträgers bereit und übermittelt Daten an den mobilen Datenträger. Die Besonderheit des erfindungsgemäßen Systems besteht darin, dass in den vom Endgerät an den mobilen Datenträger übermittelten Daten eine Information über das Versorgungssignal enthalten ist.

Die Erfindung hat den Vorteil, dass der mobile Datenträger jeweils über Informationen bzgl. eines oder mehrerer Versorgungssignale verfügt und seine internen Abläufe darauf abstimmen kann. Dabei ist es besonders vorteilhaft, dass zur Erlangung dieser Informationen nur ein sehr geringer Aufwand erforderlich ist und hierfür auf Sensoren oder ähnliches gänzlich verzichtet werden kann.

Das erfindungsgemäße System ist vorzugsweise so ausgebildet, dass vom Endgerät nur dann eine Information über das Versorgungssignal an den mobilen Datenträger übermittelt wird, wenn der mobile Datenträger zuvor seine Fähigkeit zur Bearbeitung der Information dem Endgerät mitgeteilt hat. Dadurch kann vermieden werden, dass die Information an einen systemfremden Datenträger übermittelt wird und dort zu Problemen führt. Die Mitteilung an das Endgerät erfolgt insbesondere im Rahmen eines Answer To Reset des mobilen Datenträgers. Dies hat den Vorteil, dass für die Mitteilung nicht eigens eine Datenübertragung durchgeführt werden muss.

Besonders vorteilhaft ist es, wenn die Information über das Versorgungssignal in Daten enthalten ist, die vor einer Übermittlung von Anwendungskommandos vom Endgerät an den mobilen Datenträger übermittelt werden. Dann kann die Information von Anfang an bei der Abarbeitung der Anwendungskommandos berücksichtigt werden.

In einem bevorzugten Ausführungsbeispiel des erfindungsgemäßen Systems ist die Information über das Versorgungssignal in einem standardisierten Kommando codiert, mit dem Parameter für die Datenübertragung zwischen dem Endgerät und dem mobilen Datenträger festgelegt werden. Insbesondere ist die Information über das Versorgungssignal in wenigstens einem der optionalen Datenelemente PPS2 und PPS3 des in der Norm ISO/IEC 7816-3 definierten Kommandos Protocol and Parameter Selection codiert. Dies hat den Vorteil, dass bestehende Systeme zur Realisierung der Erfindung nur geringfügig geändert werden müssen.

Vom mobilen Datenträger können auf Basis der Information über das Versorgungssignal ein oder mehrere interne Vorgänge kalibriert werden. Ebenso ist es möglich, dass die Information über das Versorgungssignal vom mobilen Datenträger bei der Auswahl ein oder mehrerer Hardware-Funktionen berücksichtigt wird. In beiden Fällen kann eine Verbesserung der internen Abläufe des mobilen Datenträgers erreicht werden.

In einer Weiterbildung der Erfindung wird die Information über das Versorgungssignal zusätzlich vom mobilen Datenträger ermittelt. Dabei kann vom mobilen Datenträger geprüft werden, ob die vom Endgerät mitgeteilte und die vom mobilen Datenträger ermittelte Information in unzulässiger Weise voneinander abweichen. So können bereits relativ geringe Abweichungen der Versorgungssignale von den vorgesehenen Werten ermittelt werden und damit Störungen und Angriffsversuche frühzeitig erkannt werden.

Bei dem Versorgungssignal kann es sich insbesondere um ein Betriebsspannungssignal oder ein Taktsignal handeln. Der mobile Datenträger kann beispielsweise als eine Chipkarte ausgebildet sein.

Ein Einsatzgebiet, für das sich die Erfindung besonders eignet, ist der Bereich der mobilen Kommunikation. In diesem Fall kann das Endgerät als ein mobiles Kommunikationsendgerät ausgebildet sein. Der mobile Datenträger kann als ein Sicherheitsmodul für das mobile Kommunikationsendgerät ausgebildet sein.

Die Erfindung bezieht sich weiterhin auf einen mobilen Datenträger, der mit Hilfe wenigstens eines von einem Endgerät bereitgestellten Versorgungssignals betreibbar ist. Der erfindungsgemäße mobile Datenträger zeichnet sich dadurch aus, dass eine Funktionalität zur Auswertung einer vom Endgerät übermittelten Information über das Versorgungssignal implementiert ist.

Beim erfindungsgemäßen Verfahren zum Betreiben eines mobilen Datenträgers wird von einem Endgerät wenigstens ein Versorgungssignal für den mobilen Datenträger bereitgestellt und es werden Daten an den mobilen Datenträger übermittelt. Die Besonderheit des erfindungsgemäßen Verfahrens besteht darin, dass in den vom Endgerät an den mobilen Datenträger übermittelten Daten eine Information über das Versorgungssignal enthalten ist.

Die Erfindung wird nachstehend anhand des in der Zeichnung dargestellten Ausführungsbeispiels erläutert, bei dem der mobile Datenträger als eine Chipkarte ausgebildet ist.

Es zeigen:
- Fig. 1: eine Prinzipdarstellung des erfindungsgemäßen Systems,
- Fig. 2: den Aufbau des im Rahmen der Erfindung verwendeten PPS- Kommandos und
- Fig. 3: ein Flussdiagramm zur Veranschaulichung der erfindungsgemäßen Übermittlung von Informationen über das Betriebsspannungssignal und/ oder das Taktsignal vom Endgerät an die Chipkarte.

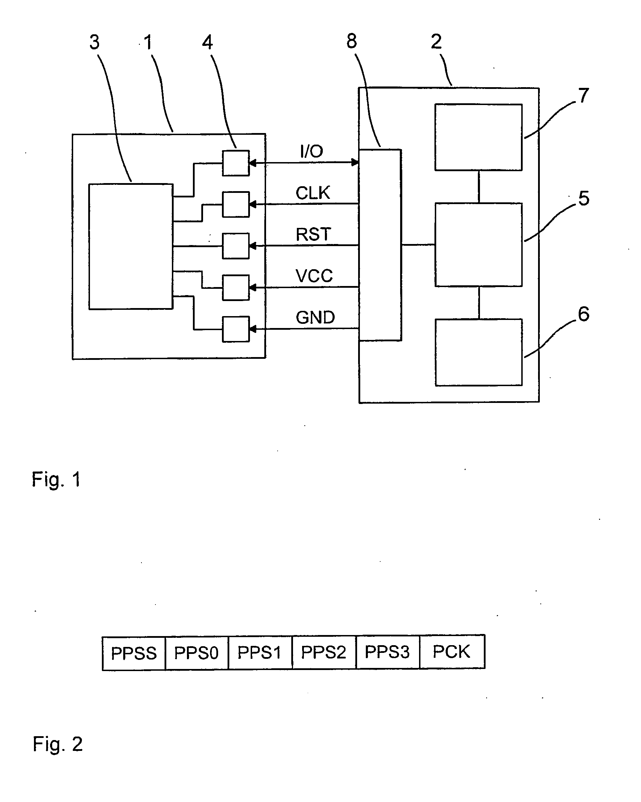

Fig. 1 zeigt eine Prinzipdarstellung des erfindungsgemäßen Systems.

Das System weist eine Chipkarte 1 und ein Endgerät 2 auf. Die Chipkarte 1 verfügt über einen integrierten Schaltkreis 3, der vorzugsweise als ein Mikroprozessor ausgebildet ist und mit einer Reihe von Kontaktflächen 4 verbunden ist. Das Endgerät 2 weist eine Elektronik 5 auf, die mit einer Tastatur 6, einem Bildschirm 7 und einer Kontaktiereinheit 8 verbunden ist.

Mit Hilfe der Kontaktiereinheit 8 wird je eine trennbare Verbindung zu jeder Kontaktfläche 4 der Chipkarte 1 ausgebildet. Auf diese Weise wird eine der Kontaktflächen 4 der Chipkarte 1 vom Endgerät 2 auf ein definiertes Massepotential GND gelegt. An eine zweite Kontaktfläche 4 wird vom Endgerät 2 ein Betriebsspannungssignal VCC angelegt. An die weiteren Kontaktflächen 4 können vom Endgerät 2 ein Reset-Signal RST, ein Taktsignal CLK und ein Datensignal I/ O angelegt werden. Das Datensignal I/ O kann im vorliegenden Ausführungsbeispiel auch vom integrierten Schaltkreis 3 der Chipkarte 1 erzeugt werden, so dass eine bidirektionale Datenübertragung zwischen der Chipkarte 1 und dem Endgerät 2 möglich ist.

Von besonderer Bedeutung für die Erfindung sind das Betriebsspannungssignal VCC und das Taktsignal CLK.

Die elektrischen Betriebsparameter der Chipkarte und die für die Kommunikation mit der Chipkarte einsetzbaren Übertragungsprotokolle sind in der Norm ISO/IEC 7816-3 festgelegt. Gemäß dieser Norm kann die Frequenz des Taktsignals CLK in einem Bereich von 1 MHz bis 5 MHz liegen. Vorgesehen sind aber auch Frequenzen bis 20 MHz. Das Betriebsspannungssignal VCC sollte bei 5 V, 3 V oder 1,8 V liegen. Weitere Spannungsbereiche könnten zukünftig verwendet werden. Für jeden der Spannungswerte ist ein Toleranzbereich von +/-10% vorgesehen, so daß das Betriebsspannungssignal VCC in den Bereichen 4,5 - 5,5 V, 2,7 - 3,3 V oder 1,62 -1,98 V liegen kann.

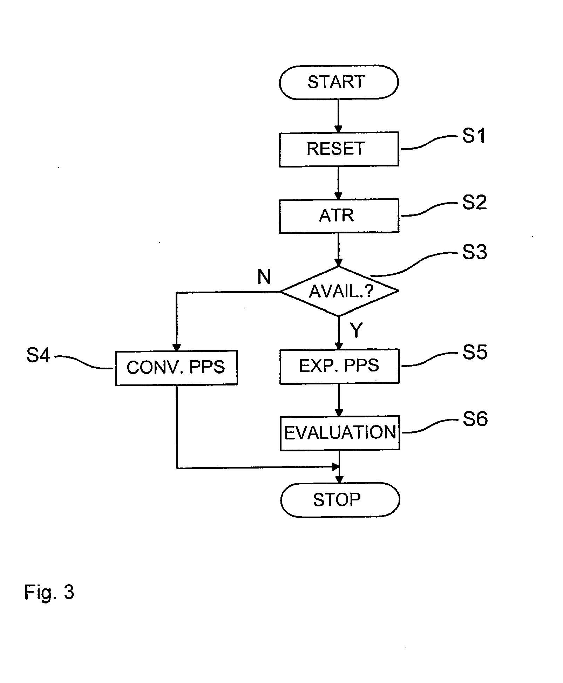

Erfindungsgemäß enthalten von dem Endgerät an den mobilen Datenträger übermittelte Daten eine Information über das Versorgungssignal. Die Information über das Versorgungssignal ist dabei vorzugsweise eine Angabe über eine physikalische Eigenschaft des Versorgungssignals. Als Information über das Versorgungssignal können insbesondere die Höhe der Betriebsspannung VCC und/ oder die Frequenz des Taktsignals CLK angegeben werden. Neben einem Wert für eine entsprechende Größe kann die Information auch eine Bereichsangabe für den Wert umfassen, wenn das Endgerät angeben möchte, daß der tatsächliche Wert der Größe innerhalb dem angegebenen Bereich um den angegebenen Wert liegt. Ein Kommando und ein Verfahren zur Übertragung der entsprechenden Information an die Chipkarte wird mit Bezug auf die Figuren 2 und 3 beschrieben. Im Folgenden wird das System zunächst weiter mit Bezug auf Figur 1 näher beschrieben.

Das Endgerät 2 ist angepaßt die Information über das Versorgungssignal an die Chipkarte 1 zu übertragen. Die Chipkarte 1 ist angepaßt die Information über das Versorgungssignal auszuwerten und für einen optimierten Betrieb zu verwenden. Die Chipkarte 1 kann interne Abläufe oder Betriebszustände abhängig von den empfangenen Informationen über das Versorgungssignal steuern.

Das Taktsignal CLK hat maßgeblichen Einfluß auf die Verarbeitungsgeschwindigkeit des integrierten Schaltkreises 3 der Chipkarte 1. Aus diesem Grund ist insbesondere bei Prozessen, die in Echtzeit ablaufen sollen, eine Kenntnis der Frequenz des Taktsignals CLK seitens der Chipkarte 1 hilfreich. Diese Information kann im Rahmen der Erfindung vom Endgerät 2 an die Chipkarte 1 übermittelt werden.

Ein Beispiel für einen Prozeß, für den eine Kenntnis der Frequenz des Taktsignals CLK von Vorteil ist, stellt das im Mobilfunkbereich vorgesehene Feature MORE TIME dar. Gemäß diesem Feature wird bei einer Chipkarte 1, die als ein Sicherheitsmodul eines Mobilfunktelefons ausgebildet ist, bei länger andauernden Kommandos die Kommandoabarbeitung in regelmäßigen Echtzeitabständen, zum Beispiel alle zwei Sekunden, unterbrochen und ein Signal an das Mobilfunktelefon übermittelt. Dadurch wird dem Mobilfunk-Netzbetreiber die Möglichkeit gegeben, zwischenzeitlich eine Authentisierung von der Chipkarte 1 zu verlangen. In Kenntnis der Frequenz des Taktsignals CLK kann die Chipkarte 1 die gewünschten Echtzeitabstände relativ genau einhalten, so dass eine unnötig häufige Unterbrechung und Signal-übermittlung vermieden werden kann. Auf diese Weise ist sicher gestellt, dass möglichst viel Rechenzeit für die Abarbeitung des Kommandos eingesetzt wird und nicht für unnötige Unterbrechungen und Signalübermittlungen verschwendet wird.

Weiterhin ist eine korrekte Einhaltung von Echtzeitvorgaben bei internen Wartezeiten, die gemäß der Spezifikation des integrierten Schaltkreises 3 der Chipkarte 1 zu beachten sind, wichtig. Derartige Wartezeiten können zum Beispiel im Hinblick auf die Einschwingzeit eines Phase Locked Loop (PLL) des integrierten Schaltkreises 3 erforderlich sein.

Die Chipkarte 1 kann in Kenntnis der Frequenz des Taktsignals CLK und/ oder der Versorgungsspannung zudem ihren Stromverbrauch besser bestimmen, überwachen und steuern.

Die Chipkarte 1 sollte mit allen zulässigen Spannungswerten betrieben werden können. Je nach Ausführung des integrierten Schaltkreises 3 können jedoch einzelne Hardware-Funktionen nur bei bestimmten Spannungswerten eingesetzt werden. Damit innerhalb der Chipkarte 1 jeweils bekannt ist, welche Hardware-Funktionen verfügbar sind, teilt das Endgerät 2 der Chipkarte 1 auf die im Folgenden noch näher erläuterte Weise mit, welchen Wert das vom Endgerät 2 für die Chipkarte 1 bereitgestellte Betriebsspannungssignal VCC aufweist.

Diese Information kann auch für andere Zwecke als zur Prüfung der Verfügbarkeit von Hardware-Funktionen verwendet werden. Beispielsweise kann die Chipkarte 1 damit eine sehr genaue Über- bzw. Unterspannungs-überwachung durchführen, bei der von der Chipkarte 1 das jeweils aktuell anliegende Betriebsspannungssignal VCC mit Hilfe eines (nicht dargestellten) Detektors ermittelt wird. Bei einer unzulässig hohen Abweichung vom mitgeteilten Wert für das Betriebsspannungssignal VCC stellt die Chipkarte 1 eine Störung fest, die möglicherweise durch einen Angriffsversuch hervorgerufen wird, und leitet Gegenmaßnahmen ein.

Fig. 2 zeigt den Aufbau des im Rahmen der Erfindung verwendeten PPS-Kommandos.

Für die Übermittlung von Informationen über das Betriebsspannungssignal VCC bzw. das Taktsignal CLK vom Endgerät 2 an die Chipkarte 1 kann erfindungsgemäß ein in der ISO/IEC 7816-3 spezifiziertes Kommando herangezogen, das als Protocol and Parameter Selection, kurz PPS, bezeichnet wird.

Das PPS-Kommando kann gemäß seiner herkömmlichen Verwendung bei der Aktivierung der Chipkarte 1 zum Einsatz kommen, um das verwendete Übertragungsprotokoll bzw. dessen Datenrate festzulegen. Hierzu wird das PPS-Kommando nach dem Answer To Reset (ATR) der Chipkarte 1 vom Endgerät 2 an die Chipkarte 1 übermittelt. Im Rahmen der Erfindung werden optionale Datenbytes des PPS-Kommandos, die bislang für eine zukünftige Verwendung reserviert sind, für eine Codierung von Informationen über das Betriebsspannungssignal VCC und/ oder das Taktsignal CLK genutzt. Die erfindungsgemäße Nutzung des PPS-Kommandos geht aus Fig. 3 hervor.

Das PPS-Kommando enthält als ein erstes Datenelement PPSS ein Byte, das als "The Initial Character" bezeichnet wird. Das Datenelement PPSS kennzeichnet für die Chipkarte 1 eindeutig, dass vom Endgerät 2 direkt nach dem ATR eine PPS-Anfrage eingeleitet wird und hat den Wert 'FF'. Auf das Datenelement PPSS folgt ein Datenelement PPS0, das als "The Formal Character" bezeichnet wird und das Übertragungsprotokoll bezeichnet sowie Angaben zu weiteren Datenelementen des PPS-Kommandos enthält. Weiterhin können drei optionale Datenelemente PPS1, PPS2 und PPS3 vorhanden sein, die als "The Parameter Characters" bezeichnet werden.

Das Datenelement PPS1 codiert diverse Parameter des Übertragungsprotokolls. Die Datenelemente PPS2 und PPS3 sind in der derzeitigen Fassung der Norm ISO/IEC 7816-3 zur zukünftigen Verwendung reserviert und können erfindungsgemäß genutzt werden, um seitens des Endgeräts 2 Informationen über das Betriebsspannungssignal VCC und/ oder das Taktsignal CLK zu codieren. Hierfür kann eines der Datenelemente PPS2 bzw. PPS3 oder es können auch beide Datenelemente PPS2 und PPS3 verwendet werden. Schließlich folgt noch ein Datenelement PCK, das eine XOR-Prüfsumme der vorangegangenen Datenelemente darstellt.

Eine Information in Bezug auf das Versorgungssignal kann direkt als Wert mit optional zugehörigem Genauigkeitsbereich oder aber indirekt mittels einer vordefinierten Zuordnung codiert werden. Neben dem Wert einer Größe können der Genauigkeitsbereich und/oder eine Abweichung (Offset) von einem vordefinierten Wert in den Informationen über das Versorgungssignal enthalten sein.

Ein Frequenz- oder Spannungsbereich kann in Unterbereiche segmentiert werden. Zusätzlich zu konkreten Werten für die Unterbereiche können eine Abweichung von dem Wert und ein Toleranzbereich vorgesehen werden.

Einer der drei (oder mehr) möglichen Spannungsbereiche kann mittels zwei (oder mehr) Bits codiert werden, wenn vorab festgelegt ist, welcher Spannungsbereich welcher Bitkombination entspricht. Für zwei Bits [B0,B1] ist folgende Festlegung möglich: [0,0]: keine Angabe; [0,1}: 5 V; [1,0}: 3 V; [1,1}: 1,8 V. Analog können alle Werte, Abweichungen oder Toleranzbereiche über feste Zuordnungen codiert werden. So könnten mittels 3 Bits 7 Spannungsbereiche und die Information "keine Angabe" codiert werden.

Geht man von einem zulässigen Bereich für das Taktsignal CLK von 1 MHz bis 5MHz, so ist eine Codierung in zwei Bits [B0,B1] wie folgt möglich: [0,0]: 1,5 MHz; [0,1}: 2,5 MHz; [1,0}: 3,5 MHz; [1,1]: 4,5 MHz.

Optional kann eine konkrete Abweichung von dem angegebenen Wert, beispielsweise "-0,1 V" bei 4,9 V statt 5 V Versorgungsspannung, angegeben werden. Für eine Codierung in drei Bits B2,[B3,B4] ist folgende Festlegung möglich: B2=0/1: positive/negative Abweichung, [0,0]: 0% Abweichung; [0,1}: 2%; [1,0}: 5%; [1,1}:10%. Eine Spannung von 4,9 V wird dann mittels der Bits B0-B4 codiert als [0,1,1,0,1].

Der Genauigkeitsbereich eines Wertes kann anhand von Werten oder prozentualer Angaben und mittels einer vordefinierten Zuordnung erfolgen. Für eine Codierung in zwei Bits [B5,B6] ist beispielsweise folgende Festlegung möglich: [0,0]: +/-0%; [0,1}: +/-1%; [1,0}: +/-2%; [1,1}: +/-5%. Eine Frequenz von 3,5 (+/- 0,175) MHz wird dann mittels der Bits B0-B6 codiert als [1,0, 0,0,0, 1,1].

Für einen größeren zulässigen Bereich der Frequenz des Taktsignals könnte - alternativ zu der Kodierung konkreter Werte in mehr als 2 Bits - die Frequenz als Bereich nach dem folgenden Prinzip codiert werden. Zumindest ein Bit codiert dabei neben einem konkreten Wert eine Schrittweite bzw. Bereichsbreite, die als Faktor für den Wert der weiteren Bits verwendet wird.

Ein erstes Bit B0 gibt einen Offset vor und zeigt zugleich an, ob der Bereich 1 MHz oder 2 MHz breit ist, wobei die weiteren Bits entsprechend mit dem Faktor 1 oder 2 zu bewerten sind. Für B0=0 liegt kein Offset vor und die Werte der weiteren Bits codieren entsprechend binär einen Wert, wobei der codierte Bereich von dem codierten Wert mal 1 (MHz) bis zu dem codierten Wert plus 1 (MHz) reicht. Ein Bereich von 3 bis 4 MHz wird dann codiert als [0, 0,0,1,1] ((0 MHz) + (3 × 1 MHz) bis (+ 1 MHz)). Analog codiert ein gesetztes Bit B0 einen Offset sowie, daß die weiteren Bits 2 MHz-Schritte angeben. Der codierte Bereich reicht von der Summe aus Offset und Wert mal 2 (MHz) bis zu der Summe plus 2 (MHz). Ein Bereich von 22 bis 24 MHz wird dann codiert als [1, 0,0,1,1] ((16 MHz) + (3 × 2 MHz) bis (+ 2 MHz)).

Auf diesem Weg können 1 MHz breite Bereiche für Werte zwischen 1 und 16 MHz sowie 2 MHz breite Bereiche für Werte zwischen 16 und 48 MHz mittels 5 Bits codiert werden. Analog können mittels 4 Bits 1 MHz-Bereiche für 1 bis 8 MHz und 2 MHz-Bereiche für 8 bis 24 MHz codiert werden.

In den oben genannten Beispielen hat genau ein Bit B0 eine Doppelfunktion als Wert- und Schrittweitenangabe. Dieser Ansatz kann dahingehend erweitert werden, daß zwei Bits B0, B1 mit Doppelfunktion eingesetzt werden. Ist das Bit B0=0, so codiert das Bit B1 seinen Wert und eine Schrittweite von 1 oder 2 für die weiteren Bits, beispielsweise B2 bis B4. Ist dagegen das Bit B0=1, so codiert B1 mit den weiteren Bits B2 bis B4 einen Wert mit der Schrittweite 4. Als zugeordneter Wert für das Bit B0 ist dann die Obergrenze des Bereichs zu wählen, der durch die verbleibenden Bits codierbar ist, also 12, 24 oder 48 für 2, 3 respektive 4 verbleibende Bits. Auf diesem Weg können mittels 4 Bits, ausgehend von den durch die letzten 3 Bits codierbaren 1 MHz-Bereiche für 1 bis 4 MHz und 2 MHz-Bereiche für 4 bis 12 MHz, 4 MHz-Bereiche für 12 bis 44 MHz codiert werden.

Zusammen mit den 2 oder 3 Bits zur Codierung von Spannungsbereichen ist auf jedem der aufgezeigten alternativen Wege für einen großen zulässigen Wertebereich beider Parameter die Übermittlung der entsprechenden Werte oder Bereiche in einem einzigen Byte möglich.

Fig. 3 zeigt ein Flussdiagramm zur Veranschaulichung der erfindungsgemäßen Übermittlung von Informationen über das Betriebsspannungssignal VCC und/ oder das Taktsignal CLK vom Endgerät 2 an die Chipkarte 1.

Der Ablauf beginnt in dem Flußdiagramms mit einem Schritt S1, bei dem die Chipkarte 1 auf an sich bekannte Weise in Betrieb genommen und dabei ein Reset der Chipkarte 1 durchgeführt wird. Auf Schritt S1 folgt ein Schritt S2, bei dem die Chipkarte 1 einen Answer To Reset (ATR) an das Endgerät 2 übermittelt. Im ATR teilt die Chipkarte 1 dem Endgerät 2 beispielsweise die zulässigen Spannungswerte für das Betriebsspannungssignal VCC und den zulässigen Frequenzbereich für das Taktsignal CLK mit.

Der im Rahmen der Erfindung verwendete ATR ist gegenüber einem herkömmlichen ATR insofern modifiziert, als darin zusätzlich die Fähigkeit der Chipkarte 1 zur Auswertung der optionalen Datenelemente PPS2 und/ oder PPS3 des PPS-Kommandos codiert ist.

In einem sich anschließenden Schritt S3 legt das Endgerät 2 die Werte für das Betriebsspannungssignal VCC und das Taktsignal CLK im Rahmen der im ATR übermittelten Vorgaben fest und prüft, ob im ATR eine Angabe zur Auswertefähigkeit der Chipkarte 1 enthalten ist, d. h. ob die Chipkarte 1 die gemäß der Erfindung in den Datenelementen PPS2 und/ oder PPS3 des PPS-Kommandos vorgesehenen Informationen über das Betriebsspannungssignal VCC und/ oder das Taktsignal CLK auswerten kann.

Fällt diese Prüfung negativ aus, so ist eine Durchführung des erfindungsgemäßen Verfahrens nicht möglich und es schließt sich an Schritt S3 ein Schritt S4 an. In dem Schritt S4 wird das PPS-Kommando in bekannter Weise ohne die optionalen Datenelemente PPS2 und/ oder PPS3 angewendet, um das Übertragungsprotokoll und/ oder weitere Parameter der Datenübertragung festzulegen. Hierzu wird vom Endgerät 2 zunächst anhand des ATR ermittelt, ob ein PPS-Kommando überhaupt erforderlich ist und ggf. ein herkömmliches PPS-Kommando an die Chipkarte 1 übermittelt. Falls die Chipkarte 1 dazu in der Lage ist, antwortet sie dem Endgerät 2 entsprechend. Damit ist der Durchlauf des Flussdiagramms beendet und es kann beispielsweise eine Anwendung gestartet werden.

Wird in Schritt S3 dagegen festgestellt, dass die Chipkarte 1 die optionalen Datenelemente PPS2 bzw. PPS3 des PPS-Kommandos gemäß der Erfindung auswerten kann, so schließt sich an Schritt S3 ein Schritt S5 an, bei dem das Endgerät 2 ein PPS-Kommando mit dem Datenelement PPS2 und/oder PPS3 an die Chipkarte 1 übermittelt. Auf Schritt S5 folgt ein Schritt S6, bei dem die Chipkarte 1 die im PPS-Kommando enthaltenen Informationen über das Betriebsspannungssignal VCC und/ oder das Taktsignal CLK auswertet.

Ab diesem Zeitpunkt sind der Spannungswert des Betriebsspannungssignals VCC und/oder die Frequenz des Taktsignals CLK innerhalb der Chipkarte 1 bekannt und können entsprechend berücksichtigt werden. Die Chipkarte 1 kann diese Informationen beispielsweise dazu nutzen, um zeitabhängige Software-Schleifen oder Hardware-Timer zu kalibrieren und um Hardware-Baugruppen optimal einzusetzen.

Mit Schritt S6 ist der Durchlauf des Flussdiagramms beendet. Es können nunmehr die üblichen Kommandos vom Endgerät 2 an die Chipkarte 1 übermittelt werden, beispielsweise um eine Anwendung auszuführen. Hierfür stehen die Informationen über das Betriebsspannungssignal VCC und/oder über das Taktsignal CLK zur Verfügung.

## Patentansprüche

1. System mit einem mobilen Datenträger (1) und einem Endgerät (2), das wenigstens ein Versorgungssignal (VCC, CLK) für den Betrieb des mobilen Datenträgers (1) bereitstellt und Daten an den mobilen Datenträger (1) übermittelt, **dadurch gekennzeichnet, dass** in den vom Endgerät (2) an den mobilen Datenträger (1) übermittelten Daten eine Information über das Versorgungssignal (VCC, CLK) enthalten ist.

2. System nach Anspruch 1, **dadurch gekennzeichnet, dass** vom Endgerät (2) nur dann eine Information über das Versorgungssignal (VCC, CLK) an den mobilen Datenträger (1) übermittelt wird, wenn der mobile Datenträger (1) zuvor seine Fähigkeit zur Bearbeitung der Information dem Endgerät (2) mitgeteilt hat.

3. System nach Anspruch 2, **dadurch gekennzeichnet, dass** die Mitteilung an das Endgerät (2) im Rahmen eines Answer To Reset des mobilen Datenträgers (1) erfolgt.

4. System nach einem der vorhergehenden Ansprüche, **dadurch gekennzeichnet, dass** die Information über das Versorgungssignal (VCC, CLK) in Daten enthalten ist, die vor einer Übermittlung von Anwendungskommandos vom Endgerät (2) an den mobilen Datenträger (1) übermittelt werden.

5. System nach einem der vorhergehenden Ansprüche, **dadurch gekennzeichnet, dass** die Information über das Versorgungssignal (VCC, CLK) in einem standardisierten Kommando codiert ist, mit dem Parameter für die Datenübertragung zwischen dem Endgerät (2) und dem mobilen Datenträger (1) festgelegt werden.

6. System nach einem der vorhergehenden Ansprüche, **dadurch gekennzeichnet, dass** die Information über das Versorgungssignal (VCC, CLK) in wenigstens einem der optionalen Datenelemente PPS2 und PPS3 des in der Norm ISO/IEC 7816-3 definierten Kommandos Protocol and Parameter Selection codiert ist.

7. System nach einem der vorhergehenden Ansprüche, **dadurch gekennzeichnet, dass** vom mobilen Datenträger (1) auf Basis der Information über das Versorgungssignal (VCC, CLK) ein oder mehrere interne Vorgänge kalibriert werden.

8. System nach einem der vorhergehenden Ansprüche, **dadurch gekennzeichnet, dass** die Information über das Versorgungssignal vom mobilen Datenträger (1) bei der Auswahl ein oder mehrerer Hardware-Funktionen berücksichtigt wird.

9. System nach einem der vorhergehenden Ansprüche, **dadurch gekennzeichnet, dass** die Information über das Versorgungssignal (VCC, CLK) zusätzlich vom mobilen Datenträger (1) ermittelt wird.

10. System nach Anspruch 9, **dadurch gekennzeichnet, dass** vom mobilen Datenträger (1) geprüft wird, ob die vom Endgerät (2) mitgeteilte und die vom mobilen Datenträger (1) ermittelte Information in unzulässiger Weise voneinander abweichen.

11. System nach einem der vorhergehenden Ansprüche, **dadurch gekennzeichnet, dass** das Versorgungssignal (VCC, CLK) ein Betriebsspannungssignal oder ein Taktsignal ist.

12. System nach einem der vorhergehenden Ansprüche, **dadurch gekennzeichnet, dass** der mobile Datenträger (1) als eine Chipkarte ausgebildet ist.

13. System nach einem der vorhergehenden Ansprüche, **dadurch gekennzeichnet, dass** das Endgerät (2) als ein mobiles Kommunikationsendgerät ausgebildet ist.

14. System nach Anspruch 13, **dadurch gekennzeichnet, dass** der mobile Datenträger (1) als ein Sicherheitsmodul für das mobile Kommunikationsendgerät ausgebildet ist.

15. Mobiler Datenträger, der mit Hilfe wenigstens eines von einem Endgerät (2) bereitgestellten Versorgungssignals (VCC, CLK) betreibbar ist, **dadurch gekennzeichnet, dass** eine Funktionalität zur Auswertung einer vom Endgerät (2) übermittelten Information über das Versorgungssignal (VCC, CLK) implementiert ist.

16. Endgerät (2) zur Kommunikation mit einem mobilen Datenträger (1), welches angepaßt ist, wenigstens ein Versorgungssignal (VCC, CLK) für den Betrieb des mobilen Datenträgers (1) bereit zu stellen und Daten an den mobilen Datenträger (1) zu übermitteln, **dadurch gekennzeichnet, dass** in den von dem Endgerät (2) an den mobilen Datenträger (1) übermittelten Daten eine Information über das Versorgungssignal (VCC, CLK) enthalten ist.

17. Verfahren zum Betreiben eines mobilen Datenträgers (1), wobei von einem Endgerät (2) wenigstens ein Versorgungssignal (VCC, CLK) für den mobilen Datenträger (1) bereitgestellt wird und Daten an den mobilen Datenträger (1) übermittelt werden, **dadurch gekennzeichnet, dass** in den vom Endgerät (2) an den mobilen Datenträger (1) übermittelten Daten eine Information über das Versorgungssignal (VCC, CLK) enthalten ist.

## Claims

1. A system having a mobile data carrier (1) and a terminal (2) which provides at least one supply signal (VCC, CLK) for operation of the mobile data carrier (1) and transmits data to the mobile data carrier (1), **characterized in that** in the data transmitted by the terminal (2) to the mobile data carrier (1) there is contained information about the supply signal (VCC, CLK).

2. The system according to claim 1, **characterized in that** the terminal (2) transmits information about the supply signal (VCC, CLK) to the mobile data carrier (1) only when the mobile data carrier (1) has previously communicated its ability to process the information to the terminal (2).

3. The system according to claim 2, **characterized in that** the communication to the terminal (2) is effected within an answer to reset of the mobile data carrier (1).

4. The system according to any of the previous claims, **characterized in that** the information about the supply signal (VCC, CLK) is contained in data that are transmitted before a transmission of application commands by the terminal (2) to the mobile data carrier (1).

5. The system according to any of the previous claims, **characterized in that** the information about the supply signal (VCC, CLK) is encoded in a standardized command with which parameters are specified for data transmission between the terminal (2) and the mobile data carrier (1).

6. The system according to any of the previous claims, **characterized in that** the information about the supply signal (VCC, CLK) is encoded in at least one of the optional data elements PPS2 and PPS3 of the command "Protocol and Parameter Selection" defined in the standard ISO/IEC 7816-3.

7. The system according to any of the previous claims, **characterized in that** one or more internal processes are calibrated by the mobile data carrier (1) on the basis of the information about the supply signal (VCC, CLK).

8. The system according to any of the previous claims, **characterized in that** the information about the supply signal is taken into consideration by the mobile data carrier (1) upon the selection of one or more hardware functions.

9. The system according to any of the previous claims, **characterized in that** the information about the supply signal (VCC, CLK) is ascertained additionally by the mobile data carrier (1).

10. The system according to claim 9, **characterized in that** it is checked by the mobile data carrier (1) whether the information communicated by the terminal (2) and that ascertained by the mobile data carrier (1) impermissibly deviate from each other.

11. The system according to any of the previous claims, **characterized in that** the supply signal (VCC, CLK) is an operating voltage signal or a clock signal.

12. The system according to any of the previous claims, **characterized in that** the mobile data carrier (1) is configured as a chip card.

13. The system according to any of the previous claims, **characterized in that** the terminal (2) is configured as a mobile communication terminal.

14. The system according to claim 13, **characterized in that** the mobile data carrier (1) is configured as a security module for the mobile communication terminal.

15. A mobile data carrier which is operable with the help of at least one supply signal (VCC, CLK) provided by a terminal (2), **characterized in that** a functionality is implemented for evaluating information transmitted by the terminal (2) about the supply signal (VCC, CLK).

16. A terminal (2) for communication with a mobile data carrier (1), which is adapted to provide at least one supply signal (VCC, CLK) for operation of the mobile data carrier (1) and to transmit data to the mobile data carrier (1), **characterized in that** in the data transmitted by the terminal (2) to the mobile data carrier (1) there is contained information about the supply signal (VCC, CLK).

17. A method for operating a mobile data carrier (1), wherein a terminal (2) provides at least one supply signal (VCC, CLK) for the mobile data carrier (1) and transmits data to the mobile data carrier (1), **characterized in that** in the data transmitted by the terminal (2) to the mobile data carrier (1) there is contained information about the supply signal (VCC, CLK).

## Revendications

1. Système comportant un support de données mobile (1) et un terminal (2) qui met à disposition au moins un signal d'alimentation (VCC, CLK) pour le fonctionnement du support de données mobile (1) et transmet des données au support de données mobile (1), **caractérisé en ce qu'**une information sur le signal d'alimentation (VCC, CLK) est contenue dans les données transmises par le terminal (2) au support de données mobile (1).

2. Système selon la revendication 1, **caractérisé en ce qu'**une information sur le signal d'alimentation (VCC, CLK) n'est transmise par le terminal (2) au support de données mobile (1) que quand le support de données mobile (1) a préalablement communiqué au terminal (2) son aptitude au traitement de l'information.

3. Système selon la revendication 2, **caractérisé en ce que** la communication à l'adresse du terminal (2) a lieu dans le cadre d'une réponse à une réinitialisation du support de données mobile (1).

4. Système selon une des revendications précédentes, **caractérisé en ce que** l'information sur le signal d'alimentation (VCC, CLK) est contenue dans des données qui sont transmises avant une transmission de commandes d'application du terminal (2) au support de données mobile (1).

5. Système selon une des revendications précédentes, **caractérisé en ce que** l'information sur le signal d'alimentation (VCC, CLK) est codée dans une commande standardisée avec laquelle des paramètres pour la transmission de données entre le terminal (2) et le support de données mobile (1) sont fixés.

6. Système selon une des revendications précédentes, **caractérisé en ce que** l'information sur le signal d'alimentation (VCC, CLK) est codée dans au moins un des éléments de données optionnels PPS2 et PPS3 de la commande Protocol and Parameter Selection définie dans la norme ISO/IEC 7816-3.

7. Système selon une des revendications précédentes, **caractérisé en ce qu'**un ou plusieurs processus sont calibrés par le support de données mobile (1) sur la base de l'information sur le signal d'alimentation (VCC, CLK).

8. Système selon une des revendications précédentes, **caractérisé en ce que** l'information sur le signal d'alimentation est prise en compte par le support de données mobile (1) lors du choix d'une ou de plusieurs fonctions hardware.

9. Système selon une des revendications précédentes, **caractérisé en ce que** l'information sur le signal d'alimentation (VCC, CLK) est déterminée en outre par le support de données mobile (1).

10. Système selon la revendication 9, **caractérisé en ce qu'**il est vérifié par le support de données mobile (1) si l'information communiquée par le terminal (2) et l'information déterminée par le support de données mobile (1) diffèrent l'une de l'autre de manière non admissible.

11. Système selon une des revendications précédentes, **caractérisé en ce que** le signal d'alimentation (VCC, CLK) est un signal de tension de fonctionnement ou un signal d'horloge.

12. Système selon une des revendications précédentes, **caractérisé en ce que** le support de données mobile (1) est réalisé sous forme d'une carte à puce.

13. Système selon une des revendications précédentes, **caractérisé en ce que** le terminal (2) est réalisé sous forme d'un terminal mobile de communication.

14. Système selon la revendication 13, **caractérisé en ce que** le support de données mobile (1) est réalisé sous forme d'un module de sécurité pour le terminal mobile de communication.

15. Support de données mobile qui peut fonctionner à l'aide d'au moins un signal d'alimentation (VCC, CLK) mis à disposition par un terminal (2), **caractérisé en ce qu'**une fonctionnalité destinée à l'évaluation d'une information transmise par le terminal (2) est implémentée par l'intermédiaire du signal d'alimentation (VCC, CLK).

16. Terminal (2) destiné à la communication avec un support de données mobile (1) et conçu pour mettre à disposition au moins un signal d'alimentation (VCC, CLK) pour le fonctionnement du support de données mobile (1) et pour transmettre des données au support de données mobile (1), **caractérisé en ce qu'**une information sur le signal d'alimentation (VCC, CLK) est contenue dans les données transmises par le terminal (2) au support de données mobile (1).

17. Procédé d'exploitation d'un support de données mobile (1), au moins un signal d'alimentation (VCC, CLK) étant mis à disposition par un terminal (2) pour le support de données mobile (1) et des données étant transmises au support de données mobile (1), **caractérisé en ce qu'**une information sur le signal d'alimentation (VCC, CLK) est contenue dans les données transmises par le terminal (2) au support de données mobile (1).
